(19) Europäisches Patentamt
European Patent Office
Office européen des brevets

(11) Veröffentlichungsnummer: **0 385 207 A2**

(12) **EUROPÄISCHE PATENTANMELDUNG**

(21) Anmeldenummer: **90103095.7**

(22) Anmeldetag: **17.02.90**

(51) Int. Cl.⁵: **C08G 65/32, C08G 18/50, B01F 17/42**

(30) Priorität: **28.02.89 DE 3906220**

(43) Veröffentlichungstag der Anmeldung: **05.09.90 Patentblatt 90/36**

(84) Benannte Vertragsstaaten: **BE DE ES FR GB IT NL**

(71) Anmelder: **Th. Goldschmidt AG**
**Goldschmidtstrasse 100 Postfach 101461**
**D-4300 Essen 1(DE)**

(72) Erfinder: **Fock, Jürgen, Dr.**
**Mörsenbroicher Weg 114**
**D-4000 Düsseldorf 30(DE)**
Erfinder: **Esselborn, Eberhard**
**Pilotystrasse 21**
**D-4300 Essen 1(DE)**

(54) **Perfluoralkylgruppen aufweisende Polyether, Verfahren zu ihrer Herstellung und deren Verwendung als Tenside und Polyolkomponente bei der Herstellung von Polyurethanen.**

(57) Perfluoralkylgruppen aufweisende Polyether der allgemeinen, durchschnittlichen Formeln

I 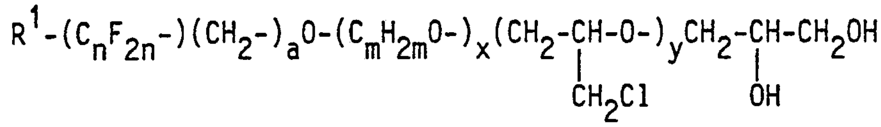

und

II 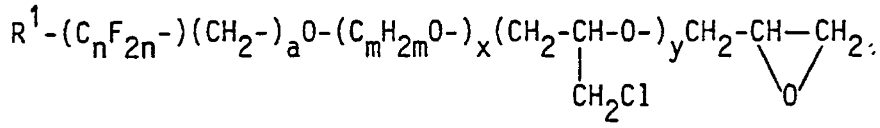

wobei $R^1$ im Polymerengemisch gleich oder verschieden und ein Wasserstoff- oder Fluorrest ist,
n einen durchschnittlichen Wert von 4 bis 12,
a einen durchschnittlichen Wert von 0 bis 4,
m einen durchschnittlichen Wert von 2 bis 18,
x einen durchschnittlichen Wert von 2 bis 50 und
y einen durchschnittlichen Wert von 0 bis 3 hat,
Verfahren zu ihrer Herstellung und deren Verwendung als Tenside und, bezogen auf Verbindungen der Formel I, als Polyolkomponente bei der Herstellung von Polyurethanen.

EP 0 385 207 A2

# Perfluoralkylgruppen aufweisende Polyether, Verfahren zu ihrer Herstellung und deren Verwendung als Tenside und als Polyolkomponente bei der Herstellung von Polyurethanen

Die Erfindung betrifft Perfluoralkylgruppen aufweisende Polyether.Sie betrifft insbesondere Perfluroalkylgruppen aufweisende Polyether-1,2-diole. Die Erfindung betrifft in einer weiteren Ausgestaltung die Herstellung dieser Perfluoralkylgruppen aufweisenden Polyether-1,2-diole und deren Verwendung als Tenside in der Farb- und Lackindustrie sowie als Polyolkomponente bei der Herstellung von Polyurethanen aus Polyolen und Polyisocyanaten.

Die Erfindung betrifft außerdem Perfluoralkylgruppen aufweisende Polyether mit einer endständigen Oxiranylgruppe als Zwischenprodukt.

Aliphatische organische Fluorverbindungen haben in hohem Maße technisches Interesse gefunden. Die Verbindungen werden als chemische Laser, funktionelle Flüssigkeiten, Hydro- und Oleophobierungsmittel, Antistatika, Tenside, zur Herstellung von Löschschäumen und für viele andere Zwecke, bei denen es um Grenzflächenphänomene geht, eingesetzt. Die Struktur geeigneter Verbindungen, deren Herstellung und Eigenschaften sind in "Tenside", 13 (1976), 1 - 5 und in "Chemiker Zeitung" 99 (1975), 477 - 485 und 100 (1976) 3 - 14 zusammenfassend beschrieben.

Zum Stand der Technik wird ferner die DE-C-35 41 515 genannt. Diese Patentschrift betrifft Perfluoralkylgruppen enthaltende Polyether der allgemeinen Formel

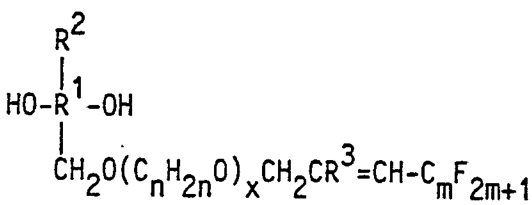

wobei
$R^1$ eine Alkylengruppe, welche die beiden Hydroxylgruppen über maximal 3 Kohlenstoffatome miteinander verbindet,
$R^2$ ein Wasserstoffrest, eine Methyl-, Ethyl- oder Phenylgruppe,
$R^3$ ein Wasserstoffrest oder eine Methylgruppe,
n eine Zahl von 2 bis 14, deren Wert innerhalb des Moleküls unterschiedlich sein kann,
m eine Zahl von 2 bis 20,
x eine Zahl von 2 bis 50,
ist.

Die Perfluoralkylgruppen enthaltenden Polyether der vorgenannten DE-PS 35 41 515 können dadurch hergestellt werden, daß man an Verbindungen der allgemeinen Formel

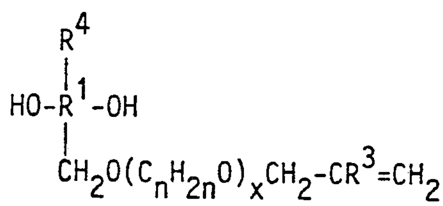

wobei
$R^1$, $R^3$, n und x die angegebene Bedeutung haben,
$R^4$ ein Wasserstoffrest, eine Methyl-, Ethyl- oder Phenylgruppe ist,
in an sich bekannter Weise in einem Lösungsmittel und in Gegenwart eines Radikalbildners mit einem Perfluoralkyljodid der allgemeinen Formel $C_mF_{2m+1}J$ umsetzt, das erhaltene Zwischenprodukt in an sich bekannter Weise mit in bezug auf J-Reste mindestens äquimolaren Mengen Alkali- oder Erdalkalihydroxid umsetzt, das gebildete Alkali- oder Erdalkalijodid abtrennt und das Lösungsmittel entfernt.

Die vorgenannten Verbindungen sind wirksame Entschäumungsmittel für wäßrige, gegebenenfalls pigmentierte, Polymerdispersionen. Sie verhindern die Bildung von Makroschaum bzw. lassen bereits

gebildeten Makroschaum zusammenfallen. Dabei wird etwaiger Mikroschaum, der in Anstrichfilmen zu sogenannten Nadelstichen (pin-holes) führt, gering gehalten oder unterdrückt.

Bei der Verwendung der Verbindungen hat sich jedoch herausgestellt, daß bei bestimmten Verwendungen, insbesondere bei Zusatz der Verbindungen zu Anstrichsystemen, die einer Bewitterung ausgesetzt sind, diese Verbindungen aufgrund der vorhandenen olefinischen Doppelbindung einer Oxidation zugänglich sind. Die Verbindungen haben außerdem eine gelbe bis gelbbraune Eigenfarbe, die vermutlich auf einen Gehalt an ionogen gebundenem Jod zurückzuführen ist. Diese Eigenfarbe stört insbesondere dann, wenn man die Polyetherole als reaktive Polyolkomponente für die Herstellung von Polyurethanen verwenden will.

Der vorliegenden Erfindung liegt die Aufgabe zugrunde, Perfluoralkylgruppen enthaltende Polyether bereitzustellen, welche diese Nachteile nicht aufweisen und wirksame Tenside sind bzw. bei ihrer Verwendung zur Herstellung von Polyurethanen diesen besondere, anwendungstechnisch erwünschte Eigenschaften verleihen.

Es wurde gefunden, daß diese Aufgabe durch die Bereitstellung neuer Perfluoralkylgruppen aufweisender Polyether gelöst wird, welche die allgemeine durchschnittliche Formel I

$$R^1-(C_nF_{2n}-)(CH_2-)_aO-(C_mH_{2m}O-)_x(CH_2-\underset{\displaystyle CH_2Cl}{\underset{|}{C}H}-O-)_yCH_2-\underset{\displaystyle OH}{\underset{|}{C}H}-CH_2OH$$

aufweisen,
wobei $R^1$ im Polymerengemisch gleich oder verschieden und ein Wasserstoff- oder Fluorrest ist,
n einen durchschnittlichen Wert von 4 bis 12,
a einen durchschnittlichen Wert von 0 bis 4,
m einen durchschnittlichen Wert von 2 bis 18,
x einen durchschnittlichen Wert von 2 bis 50 und
y einen durchschnittlichen Wert von 0 bis 3 hat.

Die ebenfalls beanspruchten Verbindungen der Formel II

$$R^1-(C_nF_{2n}-)(CH_2-)_aO-(C_mH_{2m}O-)_x(CH_2-\underset{\displaystyle CH_2Cl}{\underset{|}{C}H}-O-)_yCH_2-\overset{\quad}{CH}\underset{O}{\diagdown\diagup}CH_2$$

sind Zwischenprodukte bei der Herstellung der Verbindungen der Formel I und kausal für deren Eigenschaften verantwortlich. Die Kausalität ergibt sich aus dem Vorhandensein der Perfluoralkyl- und Polyoxyalkylengruppen im polymeren Molekül.

Bei den Verbindungen der Formel I und II handelt es sich um Polymere, die in Form eines Gemisches vorliegen. Die Formeln geben deshalb die durchschnittliche Zusammensetzung an, wobei die einzelnen Individuen im Gemisch sich insbesondere durch den Wert der Indices n, m, x und y unterscheiden. Außerdem kann im Polymerengemisch der Rest $R^1$ verschieden sein und einen Wasserstoff- oder Fluorrest bedeuten.

Der Index n gibt die Anzahl der Kohlenstoffatome im Perfluoralkylrest an und hat einen durchschnittlichen Wert von 4 bis 12. Vorzugsweise ist der durchschnittliche Wert von n 6 bis 10.

a hat einen durchschnittlichen Wert von 0 bis 3, wobei ein durchschnittlicher Wert von 2 bevorzugt ist.

Der Index m gibt die Anzahl der Kohlenstoffatome im Oxyalkylenrest wieder. Dabei hat m einen durchschnittlichen Wert von 2 bis 18. Vorzugsweise hat m einen durchschnittlichen Wert von 2 bis 4. Sollen die Verbindungen der Formel I insbesondere aufgrund ihres tensidischen Charakters verwendet werden, hat m vorzugsweise einen durchschnittlichen Wert von 2 bis 3. Besonders bevorzugte Oxyalkyleneinheiten sind die Oxyethylen-, Oxypropylen- und Oxybutyleneinheiten. Ein durchschnittlicher m-Wert von 2,5 kann beispielsweise dadurch erhalten wer den, daß im durchschnittlichen Molekül gleiche Molmengen Oxyethylen-und Oxypropyleneinheiten nebeneinander vorliegen.

Sollen die Verbindungen der Formel I als Polyolkomponente für die Herstellung von Polyurethanen eingesetzt werden, ist ein Wert von m von 3 bis 4 bevorzugt. Es sind im Handel jedoch auch längerkettige α-Olefinepoxide mit bis zu 18 Kohlenstoffatomen bekannt. Durch geeignete Auswahl der Alkylenoxide ist es möglich, das hydrophile/hydrophobe Gleichgewicht (HLB-Wert) der Verbindungen zu beeinflussen und einzustellen.

Der Index x gibt die Anzahl der vorhandenen Oxyalkyleneinheiten an und hat einen durchschnittlichen Wert von 2 bis 50.

Der Index y gibt die Anzahl der Chlormethyloxyethylengruppen an und hat einen durchschnittlichen Wert von 0 bis 3.

Der Rest $R^1$ und die vorgenannten Indices haben in der Formel II die gleichen Bedeutungen.

Die erfindungsgemäßen Verbindungen können in einer besonderen Ausgestaltung der Erfindung dadurch hergestellt werden, daß man

a) an Alkohole der allgemeinen, durchschnittlichen Formel $R^1(C_nF_{2n}-)(CH_2-)_aOH$ x Mole Alkylenoxide der allgemeinen, durchschnittlichen Formel

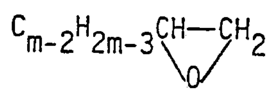

und/oder Tetrahydrofuran in Gegenwart kationischer Katalysatoren bei Temperaturen von 0 bis 100° C anlagert,

b) an die erhaltenen Polyetherole y + 1 Mole Epichlorhydrin in Gegenwart kationischer Katalysatoren bei Temperaturen von 0 bis 100° C anlagert,

c) die erhaltenen Chlorhydrine mit einem geringen Überschuß von Alkalihydroxiden oder Alkalialkoholaten bei Temperaturen von 0 bis 40° C in die entsprechenden Oxiranylverbindungen der Formel II überführt und

d) diese Verbindungen mit einer Mineralsäure, vorzugsweise in Gegenwart eines aliphatischen Alkohols und eines Phasentransferka talysators in die Verbindungen der Formel I überführt, wobei die Indices n, m, a und y und der Rest $R^1$ die bereits angegebene Bedeutung haben.

Nach der Verfahrensstufe c) liegt das Zwischenprodukt der Formel II vor. Das Endprodukt der Formel I wird erhalten, wenn sich an die Verfahrensstufe c) die Verfahrensstufe d) anschließt.

In der Verfahrensstufe a) werden an den Alkohol der allgemeinen, durchschnittlichen Formel $R^1(C_nF_{2n}-)(CH_2-)_aOH$ x Mole Alkylenoxid der allgemeinen, durchschnittlichen Formel

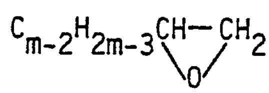

und/oder Tetrahydrofuran in Gegenwart kationischer Katalysatoren bei Temperaturen von 0 bis 100° C angelagert. Diese Anlagerungsreaktion wird kationisch katalysiert. Vorzugsweise verwendet man als Anlagerungskatalysatoren Lewissäuren. Beispiele solcher Lewissäuren sind Zinntetrachlorid, Bortrifluorid, Bortrifluorid-Etherat.

Die Anlagerungsreaktion läuft innerhalb eines Temperaturbereiches von 0 bis 100° C, insbesondere 40 bis 70° C, ab.

Die Anlagerung von y + 1 Molen Epichlorhydrin an die erhaltenen Polyetherole in der Verfahrensstufe b) verläuft ebenfalls in Gegenwart kationischer Katalysatoren innerhalb eines Temperaturbereiches von 0 bis 100° C. In beiden Verfahrensstufen können die gleichen Katalysatoren verwendet werden, und es sind die gleichen Temperaturbereiche bevorzugt.

In der Verfahrensstufe c) werden die erhaltenen Chlorhydrine in die entsprechenden Oxiranylverbindungen der Formel II überführt. Dieser Ringschluß gelingt in an sich bekannter Weise mit einem geringen Überschuß von Alkalihydroxiden oder Alkalialkoholaten, vorzugsweise Natriummethylat, bei Temperaturen von 0 bis 40° C, vorzugsweise bei 20 bis 30° C.

Aus dem Zwischenprodukt der Formel II der Verfahrensstufe c) werden nun in der sich anschließenden Verfahrensstufe d) die erfindungsgemäßen Verbindungen der Formel I dadurch erhalten, daß man auf das Zwischenprodukt der Stufe c) Mineralsäure, vorzugsweise in Gegenwart eines aliphatischen Alkoholes und eines Phasentransferkatalysators, einwirken läßt. Als Mineralsäure verwendet man insbesondere verdünnte wäßrige Mineralsäure, vorzugsweise etwa 0,5 bis 2 gew.-%ige wäßrige Schwefelsäure. Als aliphatische Alkohole eignen sich insbesondere niedere aliphatische tertiäre Alkohole mit bis zu 8 Kohlenstoffatomen. Als Phasentransferkatalysatoren verwendet man vorzugsweise grenzflächenaktive quaternäre Ammoniumverbindungen, wie z.B. Tetraalkylammoniumsulfate oder -halogenide.

Die erfindungsgemäßen Verbindungen der Formel I sind weitgehend farblose Produkte und im Gegensatz zu den Produkten der DE-PS 35 41 515 frei von Doppelbindungen und farbgebenden Verunreinigungen. Sie weisen hervorragende grenzflächenaktive Eigenschaften auf. Dies zeigt sich in einer starken Erniedrigung der Oberflächenspannung verdünnter wäßriger Lösungen.

Ein weiterer Gegenstand vorliegender Erfindung besteht in der Verwendung der Verbindungen der Formel I als Tenside in der Farb- und Lackindustrie, insbesondere als Entschäumungsmittel für wäßrige, gegebenenfalls pigmentierte Polymerdispersionen. Aufgrund ihrer grenzflächenaktiven Eigenschaften können die erfindungsgemäßen Verbindungen auch als Tenside in der Textilindustrie und zur Herstellung von Fußboden- und Lackpflegemitteln, wie z.B. Wachsemulsionen, verwendet werden. Hier wird das besondere Egalisiervermögen der Verbindungen ausgenutzt.

Ein weiterer Gegenstand der Erfindung ist die Verwendung der Verbindungen der Formel I als Polyolkomponente bei der Herstellung von Polyurethanen. Die Verbindungen der Formel I können dabei als alleinige Polyolkomponente oder als anteilige Polyolkomponente verwendet werden. Im allgemeinen wird man die Verbindungen als anteilige Polyolkomponente, vorzugsweise in Mengen von 0,1 bis 20 %, bezogen auf Polyol, zur Modifizierung der Eigenschaften von Polyurethanen einsetzen.

Durch die Verwendung der erfindungsgemäßen Verbindungen der Formel I als anteilige Polyolkomponente erhält man Polyurethane niedriger Oberflächenenergie mit hydrophoben und oleophoben Eigenschaften. Sie sind darüber hinaus geeignet, die Oberfläche von Polyurethanen klebfrei oder sogar abhäsiv werden zu lassen.

Die Verbindungen der Formel II dienen nicht nur als Zwischenprodukte zur Herstellung der erfindungsgemäßen Produkte der Formel I, sondern können auch selbst beispielsweise zur Modifizierung von Epoxidharzen verwendet werden. Sie bewirken dort ähnliche Effekte wie die erfindungsgemäßen Verbindungen der Formel I in Polyurethanen.

In den folgenden Beispielen wird zunächst die Herstellung der erfindungsgemäßen Verbindungen näher erläutert. Es werden außerdem die anwendungstechnischen Eigenschaften der erfindungsgemäßen Verbindungen am Beispiel der Erniedrigung der Oberflächenspannung wäßriger Lösungen und der Entschäumung von wäßrigen Polymerdispersionen gezeigt, und es wird die Verwendung der erfindungsgemäßen Verbindungen zur Modifizierung von Polyurethanen näher beschrieben.

## Beispiel 1

A1) Herstellung eines α-Hydroxy-ω-perfluoralkanolpolyalkylenoxids (nicht erfindungsgemäß)

465 g (ca. 1 Mol) Perfluoroctylethanol und 25 g Zinntetrachlorid werden in einem Druckreaktor unter Reinstickstoff auf 60 °C aufgeheizt und dazu über 3 h 439 g (ca. 7,6 Mol) Propylenoxid gegeben. Nach einer Nachreaktion mit der Dauer von 0,5 h wird abgekühlt. Die an einer Probe des Produktes ermittelte Epoxidzahl von 0,01 zeigt an, daß die Reaktion weitgehend beendet ist. Das Produkt wird mit 25 vol.-%igem, wäßrigem Ammoniak neutralisiert, Wasser und Nebenprodukte bei 100 °C und 13,3 Pa abdestilliert und schließlich in Gegenwart eines Filterhilfsmittels filtriert.

Die naßanalytisch ermittelte Hydroxylzahl beträgt 63, was bei einer angenommenen Funktionalität von 1 einem Molekulargewicht von ca. 890 entspricht.

A2) Herstellung eines α-Oxiranyl-ω-perfluoralkylalkanolpolyalkylenoxids (erfindungsgemäßes Zwischenprodukt)

890 g (ca. 1 Mol) des gemäß A1) erhaltenen Produktes werden mit 3 g Bortrifluoridetherat, gelöst in einer 10,5 %igen Lösung in Diethylether, versetzt und die erhaltene Mischung unter Stickstoff auf 60 °C erwärmt. Dazu werden 231 g (ca. 2,5 Mol) Epichlorhydrin so schnell gegeben, daß die Innentemperatur nicht über 65 °C ansteigt. Nach Beendigung der Zugabe wird noch eine weitere Stunde auf 60 °C erwärmt. Anschließend werden 56,7 g (ca. 1,05 Mol) Natriummethylat, gelöst in 132 g Methanol, bei etwa 25 °C mit einer Geschwindigkeit zugegeben, bei der eine Temperaturgrenze von 30 °C nicht überschritten wird. Die Reaktion ist beendet, wenn zwei im Abstand von einer halben Stunde ermittelte Alkalizahlen annähernd gleich sind und unter 1 liegen.

Nach Entfernung der flüchtigen Bestandteile durch Destillation bei 80 °C und 13,3 Pa wird das angefallene Natriumchlorid abfiltriert. Die Epoxidzahl des erhaltenen Produktes in Gew.-% Sauerstoff beträgt 1,5.

A3) Herstellung eines ω-Perfluoralkylethylpolyalkylenoxid-1,2-diols (erfindungsgemäß)

500 g (ca. 0,45 Mol) des Produktes aus Beispiel 1 A2) werden in 500 g t-Butanol gelöst und zu dieser Lösung 250 g 1 %ige wäßrige Schwefelsäure und 5 g Tetrabutylammoniumhydrogensulfat gegeben. Das erhaltene Gemisch wird auf 50 °C erwärmt und bei dieser Temperatur für 8 h gehalten. Danach wird mit 10 %iger wäßriger Natronlauge neutralisiert. Nach Zugabe von 8 g einer 30 %igen Lösung von $H_2O_2$ in Wasser werden bei 80 °C und 13,3 Pa Wasser und weitere flüchtige Bestandteile abdestilliert und das Produkt filtriert.

Es wird ein Produkt mit einem leichten Gelbstich und einer Farbzahl nach Gardner von 2 erhalten. Die Epoxidzahl beträgt jetzt 0 und die Hydroxylzahl 103. Aus der gelchromatographischen Analyse ergibt sich ein numerisches Molekulargewicht von 1000.

## Beispiele 2 bis 18

Herstellung verschiedener ω-Perfluoralkylethylpolyalkylenoxid-1,2-diole

Es wird verfahren wie in Beispiel 1 mit dem Unterschied, daß verschiedene Alkylenoxide und Perfluoralkylethanole in unterschiedlichen Molmengen bzw. Molverhältnissen zum Einsatz kommen. In Tabelle 1 werden Art und Molmenge der Alkylenoxide bzw. deren Gemische und die Zahl der Kohlenstoffatome im Startermolekül angegeben. Dabei ist die Zahl der Fluoratome bei den Startermolekülen mit der Kohlenstoffzahl 4, 6, 8 und 12 aus der Formel $C_mF_{2m+1}$-$CH_2$-$CH_2$-OH errechenbar, während bei der entsprechenden Verbindung mit 10 Kohlenstoffatomen $HC_{10}F_{20}CH_2$-$CH_2$-OH verwendet wird. Weiterhin wird in Tabelle 1 das aus der Hydroxylzahl ermittelte Molekulargewicht des α-Hydroxy-ω-perfluoralkylalkanolpolyethers $MG_{OHZ}$[1], die Epoxidzahl des α-Oxiranyl-ω-perfluoralkylalkanolpolyalkylenoxids in Gew.-% Sauerstoff, bezogen auf das Molekulargewicht des mit Epichlorhydrin und Natriummethylat umgesetzten Produktes EPZ, und das aus der Hydroxylzahl ermittelte Molekulargewicht des ω-Perfluoralkylalkanolpolyalkylenoxid-1,2-diols $MG_{OHZ}$[2] angegeben. Schließlich finden sich in Tabelle 1 das durch gelchromatographische Analyse (GPC) ermittelte numerische Molekulargewicht $\overline{M}_n$ des Diols sowie der prozentuale Fluoranteil im Endprodukt.

Tabelle 1

| Beispiel Nr. | Alkylenoxid Art | Alkylenoxid Mol | Perfluoralkyl-alkanol C-Zahl | $MG_{OHZ}$ 1) | EPZ Gew.-% O | $MG_{OHZ}$ 2) | $\bar{M}_{n_{GPC}}$ | Fluorgehalt Gew.-% F |
|---|---|---|---|---|---|---|---|---|
| 2 | PO | 2,9 | 6 | 515 | 2,2 | 728 | 700 | 33,9 |
| 3 | PO | 5,3 | 6 | 650 | 1,9 | 850 | 780 | 29,0 |
| 4 | PO | 13,4 | 6 | 1100 | 1,2 | 1300 | 1250 | 18,8 |
| 5 | PO | 7,6 | 8 | 850 | 1,5 | 1050 | 990 | 30,8 |
| 6 | PO | 13,9 | 12 | 1410 | 1,0 | 1620 | 1540 | 28,7 |
| 7 | PO/BO | 8,9/8,9 | 6 | 1440 | 1,0 | 1660 | 1580 | 14,8 |
| 8 | BO | 10,0 | 8 | 1120 | 1,2 | 1340 | 1260 | 24,0 |
| 9 | BO | 10,5 | 10 | 1250 | 1,1 | 1430 | 1400 | 26,1 |
| 10 | BO/DDO | 5,3/1,8 | 4 | 930 | 1,4 | 1150 | 1110 | 15,4 |
| 11 | BO/TDO | 4/1 | 6 | 820 | 1,5 | 1010 | 960 | 24,1 |
| 12 | EO | 2,9 | 6 | 470 | 2,5 | 680 | 620 | 36,9 |
| 13 | EO | 7,6 | 6 | 670 | 1,8 | 880 | 800 | 28,0 |
| 14 | EO | 16,7 | 6 | 920 | 1,3 | 1150 | 1100 | 21,5 |
| 15 | EO | 7,6 | 4 | 580 | 2,0 | 800 | 700 | 21,8 |
| 16 | EO/PO | 6,0/1,5 | 8 | 770 | 1,7 | 980 | 900 | 33,2 |

Legende

EO = Ethylenoxid
PO = Propylenoxid
BO = n-Butylenoxid
DDO = n-Dodecenoxid
TDO = n-Tetradecenoxid

Test zur Prüfung der Entschäumungsfähigkeit

In einem Becherglas mit einem Durchmesser von 6 cm werden 100 g einer 45 %igen wäßrigen Dispersion eines Copolymerisates auf Basis von Styrol und einem Acrylsäureester (im Handel unter der Bezeichnung Acronal®170 D erhältlich) in Gegenwart einer erfindungsgemäßen Verbindung mit einem Turbinenrührer mit einem Durchmesser von 4 cm 1 Minute lang mit einer Drehzahl von 2500 $min^{-1}$ entsprechend einer Umfangsgeschwindigkeit von 5,2 m/sec gerührt.

Die derart behandelte Dispersion wird unmittelbar nach Abstellen des Rührers in einen 50-ml-Meßkolben bis zur Eichmarke gefüllt und danach gewogen. Die Dichte der Kolbenfüllung hängt von der eingerührten Luftmenge ab und stellt ein Maß für die Wirksamkeit des Entschäumers dar.

Die Tabelle 2 zeigt die Menge der erfindungsgemäßen Verbindungen oder der nicht erfindungsgemäßen Vergleichsverbindungen in Gew.-%, bezogen auf die eingesetzte, nicht gerührte Dispersion und das Volumen der eingerührten Luft pro 100 $cm^3$ gerührter Dispersion unmittelbar nach dem Rühren. Das Volumen der eingerührten Luft pro 100 $cm^3$ gerührter Dispersion beträgt 55,4 $cm^3$, sofern kein Entschäumer eingesetzt wird.

Tabelle 2

| Substanz von Beispiel | Luftvolumen ($cm^3$) bei einer Konzentration (Gew.-%) von 0,2 | 0,1 | 0,02 |
|---|---|---|---|
| 1 | 3,3 | 6,9 | 12,4 |
| 2 | 2,4 | 6,7 | 9,2 |
| 3 | 3,7 | 6,9 | 11,5 |
| 4 | 3,5 | 8,9 | 13,0 |
| 5 | 2,6 | 5,5 | 8,8 |
| 6 | 2,1 | 4,3 | 7,3 |
| 7 | 2,2 | 4,6 | 7,5 |
| 8 | 2,0 | 4,2 | 7,2 |
| 9 | 1,9 | 4,0 | 7,0 |
| 10 | 2,0 | 4,3 | 7,1 |
| 11 | 3,1 | 4,9 | 9,3 |
| Vergleichs-produkt | | | |
| A | 5,8 | 9,7 | 18,8 |
| B | 21,4 | - | - |
| C | 28,2 | - | - |
| D | 18,4 | - | - |
| E | 16,5 | - | - |

Vergleichsprodukt A ist ein Gemisch eines Polyoxypropylen-Polysiloxan-Blockmischpolymerisates und hochdisperser Kieselsäure gemäß DE-C-24 43 853.

Vergleichsprodukt B ist ein Gemisch aus Mineralöl, Silicon und Emulgator im Handel als Nopco 8034 E erhältlich.

Vergleichsprodukt C ist ein Gemisch aus Fettsäureestern, Paraffin und Silicon, im Handel als Bevaloid I 142 erhältlich.

Vergleichsprodukt D ist ein Gemisch aus Mineralöl, Fettsäureestern und Metallseifen, im Handel als Byk 073 erhältlich.

Vergleichsprodukt E ist ein Gemisch aus Mineralöl, Alkoholen, Emulgatoren und Metallseifen, im Handel als Dehydran A erhältlich.

Bestimmung der Oberflächenspannungserniedrigung

Die Bestimmung der Oberflächenspannung von erfindungsgemäße bzw. Vergleichssubstanzen enthaltendem Wasser erfolgt nach DIN 53 914. Hierzu wird zunächst eine 1 gew.-%ige Lösung der zu prüfenden Substanz in bidestilliertem Wasser hergestellt. Als Probegefäß dient ein thermostatisierbares Glasgefäß mit einem Durchmesser von 10 cm. Es wird nun die Kraft K gemessen, die notwendig ist, um einen horizontal zur Flüssigkeitsoberfläche aufgehängten Ring mit dem Radius R aus der Flüssigkeitsoberfläche herauszuziehen:

$$\delta = \frac{K}{4\pi R}$$

Die in Tabelle 3 wiedergegebenen Werte zeigen die Oberflächenspannung erfindungsgemäßer Verbindungen sowie als nicht erfindungsgemäße Vergleichssubstanzen Verbindungen der Formel

$C_mF_{2m+1}$-$(CH_2)_3$-$(C_2H_4O)_x$-H    A

Tabelle 3

| Substanz von Beispiel | | Oberflächenspannung $\delta$ ($mNm^{-1}$) bei einer Konzentration (Gew.-%) von | | |
|---|---|---|---|---|
| | | 1 | 0,1 | 0,01 |
| 12 | | - | 21 | 24 |
| 13 | | 19 | 21 | 23 |
| 14 | | 22 | 24 | 31 |
| 15 | | 22 | 23 | 27 |
| 16 | | 18 | 21 | 22 |
| Mittelwert | | 21 | 22,8 | 26,5 |
| Vergleichssubstanz der Formel A | | | | |
| m | x | | | |
| 6 | 5 | - | 26 | 32 |
| 6 | 13 | 23 | 25 | 32 |
| 6 | 21 | 27 | 28 | 38 |
| 6 | 45 | 27 | 32 | 45 |
| 7 | 4 | - | 28 | 32 |
| 7 | 14 | 24 | 25 | 30 |
| 8 | 8 | 23 | 26 | 34 |
| Mittelwert | | 24,8 | 27,1 | 34,7 |

Bestimmung der Oberflächenspannung in einer Wachszubereitung

Erfindungsgemäße Verbindungen werden als Egalisierungsmittel in einer Wachsemulsion eingesetzt und in ihrer Wirkung mit Verbindungen der allgemeinen Formel A verglichen.

Je niedriger die Oberflächenspannung ist, um so besser ist das Egalisiervermögen der Additive, und damit tritt nach der Trocknung eine um so geringere Randbildung auf.

Zur Herstellung einer Wachsemulsion werden 5 Gew.-Teile eines emulgatorfreien Montanwachses mit einem Tropfpunkt von 83 bis 89 °C, einer Säurezahl von 85 bis 95, einer Verseifungszahl von 87 bis 104, 1 Gew.-Teil Diethanolamin und 27 Gew.-Teile Wasser verwendet.

In Tabelle 4 werden die Oberflächenspannungswerte bei Zusatz von 0,05 Gew.-% der zu prüfenden Verbindungen zur Wachsemulsion wiedergegeben.

Tabelle 4

| Substanz von Beispiel | | Oberflächenspannung $\delta$ ($mNm^{-1}$) bei Zusatz von 0,05 % Substanz |
|---|---|---|
| 12 | | 33 |
| 13 | | 31 |
| 14 | | 32 |
| 15 | | 32 |
| 16 | | 31 |
| Mittelwert | | 32 |
| Vergleichssubstanz der Formel A | | |
| m | x | |
| 6 | 5 | 35 |
| 6 | 13 | 36 |
| 6 | 21 | 37 |
| 6 | 45 | 39 |
| 7 | 4 | 34 |
| 7 | 14 | 37 |
| 8 | 8 | 33 |
| Mittelwert | | 36 |

Herstellung einer Polyurethandispersion

Eine Mischung aus 118,5 g (ca. 0,06 Mol) eines handelsüblichen Polyesterdiols aus Adipinsäure, Hexandiol-1,6 und Neopentylglykol mit der Hydroxylzahl 56,8, 11,2 g (ca. 0,01 Mol) einer Verbindung der Formel

$$Na^{\oplus}\,{}^{\ominus}O_3S-(CH_2)_3-(O-CH_2-CH_2)_{20,8}-(O-\underset{\displaystyle CH_3}{\underset{|}{C}}H-CH_2)-O-CH_2-C(C_2H_5)(CH_2OH)_2$$

und 13,4 g (ca. 0,01 Mol) der erfindungsgemäßen Substanz aus Beispiel 8 wird bei 120 °C und 13,3 Pa von möglicherweise vorhandenem Wasser befreit und danach bei 85 °C mit 24,5 g (ca. 0,11 Mol) Isophorondiisocyanat versetzt. Die Reaktion ist beendet, wenn ein konstanter Isocyanatgehalt von 1,51 Gew.-% erreicht ist. Nach Verdünnung des entstandenen Polymers mit 110 g wasserfreiem Aceton wird eine Lösung aus 1,5 g (ca. 0,025 Mol) Ethylendiamin in 50 g wasserfreiem Aceton langsam bei 60 °C zugetropft und so lange bei dieser Temperatur gehalten, bis der Isocyanatgehalt unter 0,2 Gew.-% gesunken ist. Nach Abkühlung auf 30 °C werden unter scherkraftreichem Rühren 168,6 g deionisiertes Wasser langsam zugesetzt, wobei sich eine Polyurethandispersion bildet. Nach Entfernung des Acetons durch Vakuumdestillation erhält man

eine feinteilige, stabile Dispersion mit einem Feststoffgehalt von ca. 50 Gew.-%.

Die Dispersion wird mit Hilfe einer Rakel auf einer Glasplatte vergossen, wobei sich nach Verdunsten des Wassers eine klare, farblose, elastische und klebfreie Folie ausbildet.

Eine Folie, die im Vergleichsversuch ohne Verwendung der Substanz aus Beispiel 8 hergestellt wird, ist zwar ebenfalls klar, farblos und elastisch, sie weist jedoch eine gewisse Klebrigkeit auf.

Eine Folie, die im Vergleichsversuch unter Verwendung eines ω-Perfluorhexyl-propyl-polybutylenoxid-n-dodecenoxid-1,3-diols (entsprechend Beispiel 11 der DE-C-35 41 515) hergestellt wird, ist zwar klar, elastisch und klebfrei, weist jedoch einen deutlich gelblichen Farbstich auf.

Herstellung einer vernetzten Polyurethanfolie

Eine Mischung von 30,0 g (ca. 0,02 Mol) der erfindungsgemäßen Substanz aus Beispiel 8 und 1721 g (ca. 3 Mol) trimerisiertes Hexamethylendiisocyanat in 570 g eines Gemisches von Ethylglykolacetat und Toluol im Gewichtsverhältnis von 1 : 1 werden unter Stickstoff und unter Ausschluß von Wasser für 2 h auf 50 °C erwärmt. Nach Abkühlen auf 25 °C werden 1250 g (ca. 3 Mol) eines propoxylierten Trimethylolpropans mit dem Molekulargewicht 420 und 3,5 g Dibutylzinndilaurat bei 67 Pa bei gleichbleibender Temperatur von 25 °C für 10 Minuten verrührt. Die erhaltene Mischung wird mit Hilfe einer Rakel auf einer Glasplatte vergossen. Die Trocknung erfolgt 2 h bei Raumtemperatur, danach wird die erhaltene Folie, die eine Schichtdicke von ca. 100 µm aufweist, für 30 Minuten auf 80 °C erwärmt und schließlich für 15 h bei 60 °C getempert.

Die Folie ist klar, farblos und weichelastisch. Die zur Ermittlung der Oberflächenenergie dienenden Randwinkel haben bei Verwendung von Wasser einen Wert von 100° und bei Verwendung von n-Dodecan einen Wert von 45° bei 25 °C.

Im Vergleichsversuch wird in oben beschriebener Weise eine Folie ohne Verwendung der erfindungsgemäßen Substanz hergestellt. Dabei ergeben sich Randwinkel von 55° für Wasser und 15° für n-Dodecan.

In einem weiteren Vergleichsversuch wird eine Folie unter Verwendung eines ω-Perfluorhexylpropyl-poly-butylenoxid-n-dodecenoxid-1,3-diols (entsprechend Beispiel 11 der DE-C-35 41 515) hergestellt, die einen deutlich gelblichen Farbton aufweist.

**Ansprüche**

1. Perfluoralkylgruppen aufweisende Polyether der allgemeinen, durchschnittlichen Formeln

I

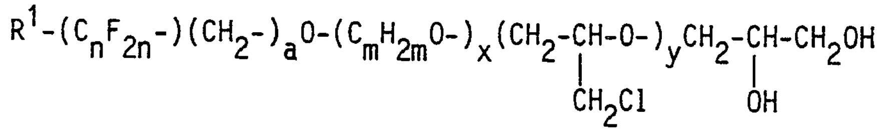

und

II

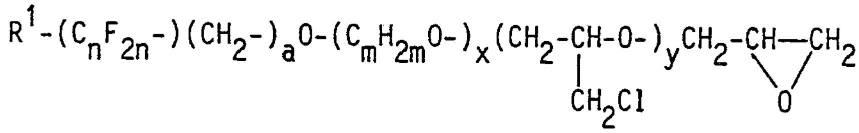

wobei $R^1$ im Polymerengemisch gleich oder verschieden und ein Wasserstoff- oder Fluorrest ist,
n einen durchschnittlichen Wert von 4 bis 12,
a einen durchschnittlichen Wert von 0 bis 4,
m einen durchschnittlichen Wert von 2 bis 18,
x einen durchschnittlichen Wert von 2 bis 50 und
y einen durchschnittlichen Wert von 0 bis 3 hat.

2. Verfahren zur Herstellung der Verbindungen des Anspruchs 1, dadurch gekennzeichnet, daß man
a) an Alkohole der allgemeinen durchschnittlichen Formel $R^1\text{-}(C_nF_{2n}\text{-})(CH_2\text{-})_aOH$ x Mole Alkylenoxide der allgemeinen, durchschnittlichen Formel

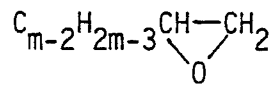

und/oder Tetrahydrofuran in Gegenwart kationischer Katalysatoren bei Temperaturen von 0 bis 100 °C anlagert,

b) an die erhaltenen Polyetherole y + 1 Mole Epichlorhydrin in Gegenwart kationischer Katalysatoren bei Temperaturen von 0 bis 100 °C anlagert,

c) die erhaltenen Chlorhydrine mit einem geringen Überschuß von Alkalihydroxiden oder Alkalialkoholaten bei Temperaturen von 0 bis 40 °C in die entsprechenden Oxiranylverbindungen der Formel II überführt und

d) diese Verbindungen mit einer Mineralsäure, vorzugsweise in Gegenwart eines aliphatischen Alkohols und eines Phasentransferkatalysators in die Verbindungen der Formel I überführt,

wobei die Indices n, m, a und y und der Rest $R^1$ die bereits angegebene Bedeutung haben.

3. Verfahren nach Anspruch 2, dadurch gekennzeichnet, daß man in den Verfahrensstufen a) und b) als Katalysatoren Lewissäuren verwendet und die Anlagerungsprodukte bei Temperaturen von 40 bis 70 °C durchführt.

4. Verfahren nach Anspruch 2, dadurch gekennzeichnet, daß man in der Verfahrensstufe c) als Alkalialkoholat Natriummethylat verwendet und die Reaktion bei 20 bis 30 °C durchführt.

5. Verfahren nach Anspruch 2, dadurch gekennzeichnet, daß man in der Verfahrensstufe d) die Reaktion mit 1 gew.-%iger wäßriger Schwefelsäure in Gegenwart eines niederen aliphatischen tertiären Alkohols durchführt und als Katalysator Tetraalkylammoniumsulfate oder -halogenide verwendet.

6. Verwendung der Verbindungen der Formel I des Anspruchs 1 als Tenside in der Farb- und Lackindustrie, insbesondere als Entschäumungsmittel für wäßrige) gegebenenfalls pigmentierte Polymerdispersionen.

7. Verwendung der Verbindungen der Formel I des Anspruchs 1 als Polyolkomponente bei der Herstellung von Polyurethanen.

8. Verwendung der Verbindungen der Formel II des Anspruchs 1 als Modifizierungsmittel für Epoxidharze.

Patentansprüche für folgenden Vertragsstaat: ES

1.Verfahren zur Herstellung von Perfluoralkylgruppen aufweisenden Polyethern der allgemeinen, durchschnittlichen Formeln

I 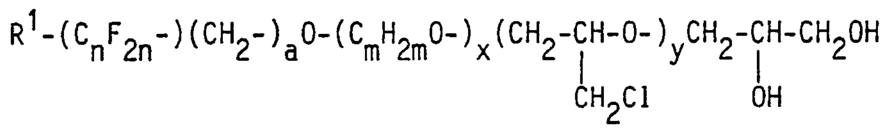

und

II 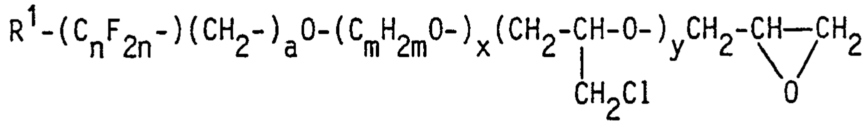

wobei $R^1$ im Polymerengemisch gleich oder verschieden und ein Wasserstoff- oder Fluorrest ist,
n einen durchschnittlichen Wert von 4 bis 12,
a einen durchschnittlichen Wert von 0 bis 4,
m einen durchschnittlichen Wert von 2 bis 18,
x einen durchschnittlichen Wert von 2 bis 50 und
y einen durchschnittlichen Wert von 0 bis 3 hat,
dadurch gekennzeichnet, daß man

a) an Alkohole der allgemeinen durchschnittlichen Formel $R^1-(C_nF_{2n}-)(CH_2)_aOH$ x Mole Alkylenoxide der allgemeinen, durchschnittlichen Formel

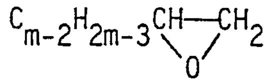

und/oder Tetrahydrofuran in Gegenwart kationischer Katalysatoren bei Temperaturen von 0 bis 100° C anlagert,

b) an die erhaltenen Polyetherole y + 1 Mole Epichlorhydrin in Gegenwart kationischer Katalysatoren bei Temperaturen von 0 bis 100° C anlagert,

c) die erhaltenen Chlorhydrine mit einem geringen Überschuß von Alkalihydroxiden oder Alkalialkoholaten bei Temperaturen von 0 bis 40° C in die entsprechenden Oxiranylverbindungen der Formel II überführt und

d) diese Verbindungen mit einer Mineralsäure, vorzugsweise in Gegenwart eines aliphatischen Alkohols und eines Phasentransferkatalysators in die Verbindungen der Formel I überführt.

2. Verfahren nach Anspruch 1, dadurch gekennzeichnet) daß man in den Verfahrensstufen a) und b) als Katalysatoren Lewissäuren verwendet und die Anlagerungsprodukte bei Temperaturen von 40 bis 70° C durchführt.

3.Verfahren nach Anspruch 1, dadurch gekennzeichnet, daß man in der Verfahrensstufe c) als Alkalialkoholat Natriummethylat verwendet und die Reaktion bei 20 bis 30° C durchführt.

4. Verfahren nach Anspruch 1, dadurch gekennzeichnet, daß man in der Verfahrensstufe d) die Reaktion mit 1 gew.-%iger wäßriger Schwefelsäure in Gegenwart eines niederen aliphatischen tertiären Alkohols durchführt und als Katalysator Tetraalkylammoniumsulfate oder -halogenide verwendet.

5. Verwendung der Verbindungen der Formel I des Anspruchs 1 als Tenside in der Farb- und Lackindustrie, insbesondere als Entschäumungsmittel für wäßrige, gegebenenfalls pigmentierte Polymerdispersionen.

6. Verwendung der Verbindungen der Formel I des Anspruchs 1 als Polyolkomponente bei der Herstellung von Polyurethanen.

7. Verwendung der Verbindungen der Formel II des Anspruchs 1 als Modifizierungsmittel für Epoxidharze.